# EUROPEAN PATENT APPLICATION

(11) **EP 1 084 667 A1**
(43) Date of publication of application: **21.03.2001**
(21) Application number: 00500202.7
(22) Date of filing: 13.09.2000
(51) Int. Cl.: A47J 37/08

(54) **A machine for warming up and toasting sandwiches and other analogous foodstuffs**

(30) Priority: 13.09.1999 ES 9902333 U
(71) Applicant: Ruiz Huertas, José Maria, 08400 Granollers, Barcelona (ES); Miro Pepio, Rosa Maria, 08400 Granollers, Barcelona (ES)
(72) Inventor: Ruiz Huertas, Jose Maria, 08400 Granollers, Barcelona (ES)
(74) Representative: Pastells Teixido, Manuel

(57) **Abstract**

This machine is characterized in that it is formed by a conveniently vented chamber (1) comprising in its inside at least one automatically actuated electric grill (4), the pertinent sandwich or other analogous foodstuff being properly wrapped up and being in this condition arranged in said grill by means of introducing it through an open front (2) of said chamber, the machine being activated by means of the actuation of controls (33) externally provided on it. The sandwich or other analogous foodstuff is wrapped up in sulphurized paper and is in this condition arranged in said grill (4). Said chamber does innerly comprise at least one pusher provided to push the sandwich or other analogous foodstuff out of said chamber thereby dropping it onto a receiver tray provided at the front side of said chamber.

## Description

The present invention relates to a machine for warming up and toasting sandwiches and other analogous foodstuffs.

This machine has been devised to be used mainly in bars and public houses preparing warm sandwiches and among them those called "bikinis" formed by a ham-and-cheese sandwich.

The pertinent sandwich is usually prepared by first forming the corresponding sandwich to thereupon warm it up in an electric grill generally comprising two heated plates linked to each other in a hinged connection, this forcing a person to be tending said grill during the whole sandwich warming up process all the while opening and closing the grill once and again till said sandwich has been done as desired.

With the machine being the object of the present invention a person tending the grill during the sandwich warming up process is no longer necessary, said person now just having to place the sandwich in the grill comprised in said machine, actuate the corresponding controls for the programming and actuation of said machine, carry out any other job, and after a short while pick up said sandwich from a receiver tray onto which said sandwich is dropped when being pushed out by the machine once this latter has warmed it up and toasted it if thus programmed.

For such a purpose said machine is formed by a chamber whose configuration is similar to that of a microwave oven, said chamber being nevertheless open at the front and at the rear (and being also provided with a rear grid) and comprising in its inside at least one automatically actuated electric grill between whose two heated plates, i.e. a lower, fixed one and an upper, link-coupled one, the sandwich or the like to be heated is arranged by means of introducing it through the open front of said chamber; the grill operating on the sandwich upon the actuation of the controls as already outlined in the previous paragraph.

The grill's upper heated plate is raised and lowered by means of a cam-and-link device, the machine also comprising a device to adjust the height of said heated plate, said device being used to adjust the pressure with which said heated plate will be applied on the sandwich according to the latter's thickness or characteristics, this allowing to warm up not only any type of sandwich but also pizzas, pastries and other analogous foodstuffs that in the case of pizzas will be arranged in two pieces with one on top of the other, with the top one inverted in order to assure that the heated plates come into contact with the sides of the foodstuff not bearing any condiments.

In order to be introduced into the machine the sandwich or other foodstuff is preferably wrapped up in sulphurized paper or in another adequate wrapping, and since in this way the foodstuffs do not come into contact with the grill sandwiches of different varieties can be warmed up and toasted without flavours getting mixed and with no need to repeatedly clean up said grill, said wrapping also assuring that the sandwich is not ruined when being pushed out of the machine by the pusher comprised in it.

The already prepared and wrapped sandwiches and other foodstuffs will be kept in a conventional refrigerating chamber or display case in such a way that they can preferably be seen by the customer, and they will be picked up from there in order to be put into the grill of the machine in question.

These and other characteristics will be best made apparent by the following detailed description whose understanding will be made easier by the accompanying two sheets of drawings showing a practical embodiment cited only by way of an example not limiting the scope of the present invention.

In the drawings:
Fig. 1 is a perspective view showing a machine as per the invention;
Fig. 2 is a sectional side view of said machine, and

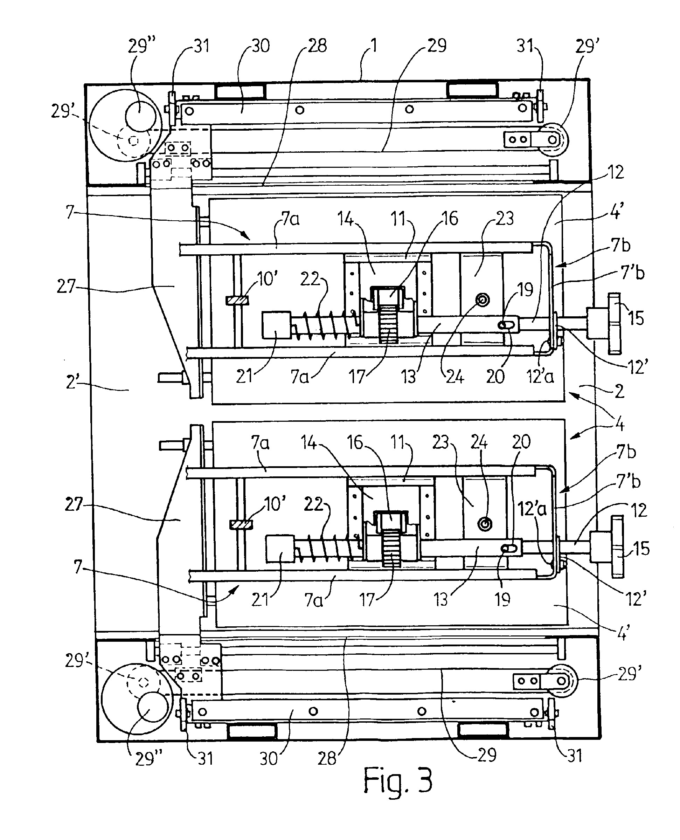

Fig. 3 shows a sectional plan-view of said machine. According to the drawings this machine for warming up and toasting sandwiches and other analogous foodstuffs comprises a rectangular, parallelepipedic chamber 1 having an open front 2 and an open rear 2', lateral venting slits 3, and a grid (not shown) closing the open rear 2'.

From the open rear to the open front two electric grills 4 are installed in an adjacent arrangement inside said chamber, the lower heated plate 4' and the upper heated plate 4" of each of said grills being properly provided with the corresponding resistors 5, the lower heated plate 4' being fixed to the base of the chamber 1 whereas the upper heated plate 4" is attached through a height adjusting device to a carrier 7 linked to the top of said chamber 1.

This linking is accomplished by means of the hinged connection of the rear portion of carrier 7 to the lower ends of vertical arms 8 branching off upwardly to be fixed to the top of chamber 1, said carrier 7 being raised and lowered through a cam 10 and a link 10' by a motor 9 fixed to a bracket 8', carrier 7 carrying with it said upper heated plate 4".

Each carrier 7 is formed by two parallel longerons 7a also arranged in a parallel arrangement on said upper heated plate 4" and mutually connected by an intermediary bridging-piece 11 and a transversal front flat 7b having an upper extension 7'b through which a rod 12 extends and at the rear slides telescopically in a tube 13 also extending through both parallel branches of a bracket 14 provided in the shape of an inverted U and fixed on said bridging-piece 11.

Rod 12 ends frontally in a knob 15 and with tube 13 forms part of a height adjusting device 6, this latter also comprising a vertical rack 16 centrally fixed on upper heated plate 4" and extending through bridging-piece 11 and bracket 14 to engage a pinion 17 arranged between both branches of bracket 14 and having as its shaft tube 13.

By means of knob 15 the assembly formed by rod 12 and tube 13 is rotated thus adjusting the height of upper heated plate 4", the chosen position being locked with a stub 12'a provided on the free end of a radial appendage 12' provided on rod 12 next to extension 7'b, by means of correspondingly shifting said rod 12 in tube 13 said stub being introduced into the pertinent one of orifices 18 provided in said extension around rod 12.

Tube 13 is rotated together with rod 12 because of this latter comprising an intermediary, transversal peg 19 protruding from both sides and extending through both longitudinal, oblong holes 20 oppositely provided in tube 13 having fixed to its rear end a bushing 21 having fastened to it an end of a spring 22 surrounding tube 13 and fastened at its other end to bracket 14 thus eliminating all abrupt motions when adjusting the height of upper heated plate 4".

In order to assure the perfect shifting of said heated plate 4" with respect to carrier 7 this latter comprises between bridging-piece 11 and transversal flat 7b a second bridging-piece 23 through which a centring pin 24 extends and is vertically fixed on said heated plate 4", a stroke-end device 25 being installed between one of arms 8 and said carrier 7 and delimiting the travel of this latter and hence also of upper heated plate 4" when being raised and lowered.

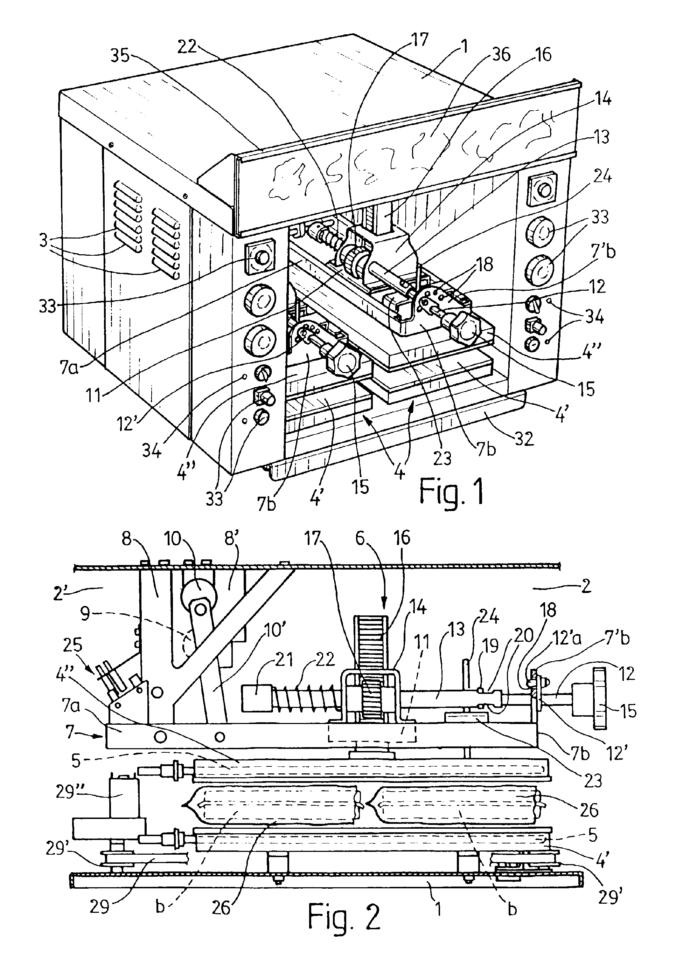

In the example shown sandwiches (b) arranged in grills 4 (see Fig. 2) have each been previously introduced into a bag 26 made of sulphurized paper allowing to perfectly warm up or toast said sandwiches as well as to push them out of grills 4 without ruining them, said pushing out being accomplished by means of the actuation of each of both pusher arms 27 provided within chamber 1, said bags 26 also contributing to the previous preservation of sandwiches b in the refrigerating chamber or display case.

Each pusher arm 27 is transversally and horizontally arranged behind the corresponding grill 4 at the height of sandwiches (b), and at one end and extending through an oblong opening 28 provided in an inner side wall of chamber 1 is fixed to an endless band 29 being apt to travel on two rotary end rolls 29' driven by a motor 29", arm 27 also travelling on a guide 30 juxtaposed to said endless band 29 and provided with adequate stroke-end end sensors 31 delimiting the travel of said arm 27.

The already warmed up sandwiches (b) pushed out of chamber 1 by pusher 27 are dropped onto an advantageously retractable receiver tray 32 installed at the front side of said chamber 1 underneath the open front 2, said front side also comprising the appropriate pushbuttons or controls 33 for the activation of the machine (actuation time for the actuation of the grill on the sandwich, start, stop, ...) as well as the pilot lamps 34 needed to indicate that some of said actuations are being carried out.

The front side of chamber 1 can also comprise on its upper portion (Fig. 1) a carrier 35 apt to be removably fitted with a poster 36 indicating the name of the machine and/or such other characteristics of this latter as are deemed convenient.

## Claims

1. A machine for warming up and toasting sandwiches and other analogous foodstuffs, characterized in that it is formed by a conveniently vented chamber (1) comprising in its inside at least one automatically actuated electric grill (4), the pertinent sandwich (b) or other analogous foodstuff being properly wrapped up and being in this condition arranged in said grill by means of introducing it through an open front (2) of said chamber (1), the machine being activated by means of the actuation of controls (33) externally provided on it.

2. A machine for warming up and toasting sandwiches and other analogous foodstuffs as per claim 1, characterized in that the sandwich (b) or other analogous foodstuff is wrapped up in sulphurized paper and is in this condition arranged in said grill (4).

3. A machine for warming up and toasting sandwiches and other analogous foodstuffs as per claim 1, characterized in that chamber (1) does innerly comprise at least one pusher (27) provided to push the sandwich (b) or other analogous foodstuff out of said chamber (1) thereby dropping it onto a receiver tray (32) provided at the front side of said chamber.

4. A machine for warming up and toasting sandwiches and other analogous foodstuffs as per claim 1, characterized in that grill (4) comprises the fixed, lower heated plate (4') and the link-coupled, upper heated plate (4"), this latter being raised or lowered by means of a cam-and-link device formed by cam (10) and link (10').

5. A machine for warming up and toasting sandwiches and other analogous foodstuffs as per claim 4, characterized in that the upper heated plate (4") is linked to the cam-and-link device formed by cam (10) and link (10') through a carrier (7) having said heated plate (4") attached to it by means of a height adjusting device (6).

6. A machine for warming up and toasting sandwiches and other analogous foodstuffs as per claim 3, characterized in that the pusher comprises an arm (27) arranged behind grill (4) and attached to an endless band (29) driven by a motor (29"), said arm being thus apt to be shifted along said grill (4) between its two heated plates (4', 4") once the sandwich (b) has been warmed up.

7. A machine for warming up and toasting sandwiches and other analogous foodstuffs as per claim 5, characterized in that the height adjusting device (6) comprises a vertical rack (16) fixed on the upper heated plate (4") and extending through its carrier (7) to engage a pinion (17) whose shaft is longitudinally attached to said carrier (7) and is provided with actuating and locking means.

8. A machine for warming up and toasting sandwiches and other analogous foodstuffs as per claim 1, characterized in that chamber (1) is also open at the rear, where it is provided with a grid.
